# EUROPÄISCHE PATENTANMELDUNG

(11) **EP 2 676 538 A1**
(43) Veröffentlichungstag der Anmeldung: **25.12.2013**
(21) Anmeldenummer: 13167776.7
(22) Anmeldetag: 15.05.2013
(51) Int. Cl.: A01F 12/26, A01F 12/28

(54) **Tangentialdreschwerk mit einer Fördertrommel und einer Dresch- oder Abscheidetrommel**

(30) Priorität: 22.06.2012 DE 102012210649
(71) Anmelder: DEERE & COMPANY, Moline, Illinois 61265-8098 (US)
(72) Erfinder: Hess, Wolfgang, 66877 Ramstein (DE); Fuchs, Volker, 54439 Saarburg (DE)
(74) Vertreter: Holst, Sönke

(57) **Zusammenfassung**

Ein Tangentialdreschwerk umfasst eine Fördertrommel (26) und eine unmittelbar stromab der Fördertrommel (26) angeordnete Dresch- oder Abscheidetrommel (30), der ein einlassseitig positionsveränderbarer Dresch- oder Abscheidekorb (36) zugeordnet ist. Ein gemeinsam mit dem Dresch- oder Abscheidekorb (36) verstellbarer Abstreifer (35) wirkt mit der Fördertrommel (26) zusammen.

## Beschreibung

Die Erfindung betrifft ein Tangentialdreschwerk mit einer Fördertrommel und einer unmittelbar stromab der Fördertrommel angeordneten Dresch- oder Abscheidetrommel, der ein einlassseitig positionsveränderbarer Dresch- oder Abscheidekorb zugeordnet ist.

### Stand der Technik

Bei Tangentialdreschwerken erfolgt der Dreschvorgang durch eine Dreschtrommel, der das auszudreschende Erntegut in tangentialer Richtung zugeführt wird. Derartige Tangentialdreschwerke werden auch als Mehrtrommeldreschwerke hergestellt, bei denen stromab einer Dreschtrommel eine tangential arbeitende Abscheidetrommel angeordnet ist, um das nach dem Dreschvorgang noch im Stroh vorhandene Korn abzuscheiden. Das Erntegut wird der Dreschtrommel bzw. der Abscheidetrommel in vielen Fällen durch eine unter- oder oberschlächtig arbeitende Fördertrommel zugeführt. Üblicherweise sind die Abstände zwischen der Dreschtrommel bzw. der Abscheidetrommel und einem deren Umfang benachbart angeordneten Dresch- oder Abscheidekorb zur Anpassung an die jeweiligen Erntebedingungen und die Art des Ernteguts zumindest einlassseitig verstellbar, vgl. DE 10 2005 036 675 A1.

### Aufgabe der Erfindung

Der Dresch- oder Abscheidetrommel wird das Erntegut direkt durch die Fördertrommel zugeführt. Wird nun der einlassseitige Spalt zwischen der Dresch- oder Abscheidetrommel verstellt, erreicht das Erntegut den Spalt nicht mehr in allen Fällen an einer optimalen Stelle, denn der Konstrukteur wird versuchen, die Geometrie der Fördertrommel und der Dresch- oder Abscheidetrommel derart zu dimensionieren, dass sämtliches Erntegut auch bei dem kleinsten möglichen Spalt noch zwischen der Dresch- oder Abscheidetrommel und dem Dresch- oder Abscheidekorb problemlos einläuft. Dadurch wird der Erntegutfluss aber bei größeren Spaltweiten am Einlass der Dresch- oder Abscheidetrommel unnötig eingeengt, was zu einer unbefriedigenden Dresch- oder Trennwirkung oder gar zu Verstopfungen führen kann.

Die der Erfindung zu Grunde liegende Aufgabe wird darin gesehen, ein Tangentialdreschwerk mit einer Fördertrommel und einer unmittelbar stromab der Fördertrommel angeordneten Dresch- oder Abscheidetrommel bereitzustellen, bei welchem diese Probleme nicht oder in einem verminderten Maß zu erwarten sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung

Ein Tangentialdreschwerk umfasst eine Fördertrommel und eine stromab der Fördertrommel angeordnete Dresch- oder Abscheidetrommel, der ein einlassseitig positionsveränderbarer Dresch- oder Abscheidekorb zugeordnet ist. Es wird vorgeschlagen, der Fördertrommel einen Abstreifer zuzuordnen, dessen Position gemeinsam mit dem Dresch- oder Abscheidekorb verstellbar ist. Somit wird auch die Position des Abstreifers verstellt, wenn der Dresch- oder Abscheidekorb gegenüber der Dresch- oder Abscheidetrommel verändert wird, um den Einlassspalt des Dresch- oder Abscheidekorbs beispielsweise abhängig von der Art des Ernteguts und/oder dessen Eigenschaften, z.B. der Feuchtigkeit, zu variieren.

Auf diese Weise wird die Abgaberichtung der Fördertrommel selbsttätig an den jeweils eingestellten Dresch- oder Abscheidespalt angepasst, sodass die eingangs geschilderten Nachteile überwunden werden oder zumindest in einem verringerten Ausmaß vorliegen. Wenn der Dresch- oder Abscheidespalt vergrößert wird, wird demnach das Erntegut von der Fördertrommel weiter nach außen in den Dresch- oder Abscheidespalt abgegeben als bei einem engeren Dresch- oder Abscheidespalt. Somit auch bei einer Verstellung des Dresch- oder Abscheidespalts ein optimaler Erntegutfluss gewährleistet.

Bei einer bevorzugten Ausführungsform der Erfindung ist der Dresch- oder Abscheidekorb um eine seinem Auslass benachbarte Verstellachse drehbar, die sich parallel zur Drehachse der Dresch- oder Abscheidetrommel erstreckt. Es wäre jedoch auch denkbar, den Dresch- oder Abscheidekorb zur Veränderung der Größe des Dresch- oder Abscheidespalts an seinem Einlass und an seinem Auslass parallel zu verschieben.

Vorzugsweise ist der Abstreifer um eine sich parallel zur Drehachse der Dresch- oder Abscheidetrommel erstreckende Achse drehbar am Dresch- oder Abscheidekorb angelenkt. Dadurch erfolgt eine optimale Anpassung der Abgaberichtung der Fördertrommel bei einer Verstellung des Dresch- oder Abscheidespaltes.

Als besonders vorteilhaft hat sich eine Ausführungsform der Erfindung erwiesen, bei welcher der Abstreifer im Abstand von der Achse, an der er drehbar mit dem Dresch- oder Abscheidekorb verbunden ist, drehbar mit einem Ende eines Lenkers verbunden ist, der an seinem anderen Ende um eine sich parallel zur Drehachse der Dresch- oder Abscheidetrommel erstreckende Achse drehbar gelagert ist. Diese Kinematik ermöglicht eine optimierte Verstellung des Abstreifers bei einer Verstellung des Dresch- oder Abscheidespalts. Insbesondere kann gewährleistet werden, dass der Winkel zwischen der dem Erntegut benachbarten Fläche des Abstreifers und der vorlaufenden Fläche eines Zinkens der Fördertrommel bei allen vorgesehenen Stellungen des Verstellmechanismus größer als 90° ist, was Wickelprobleme an der Fördertrommel vermeidet.

Die Fördertrommel kann unter- oder oberschlächtig arbeiten.

Bei einer bevorzugten Ausführungsform umfasst die Fördertrommel eine Vielzahl von voneinander in axialer Richtung beabstandeten Förderscheiben, um deren Umfang Zinken verteilt sind, während Abstreiferelemente des Abstreifers jeweils in den Zwischenraum zwischen in axialer Richtung benachbarten Zinken der Fördertrommel eingreifen. Die Zinken benachbarter Förderscheiben sind vorzugsweise relativ zueinander winkelversetzt angeordnet, sodass die Spitzen der Zinken der Fördertrommel auf einer gedachten Wendel liegen. Die Zinken können dreieckförmig und in Umfangsrichtung zu einer radialen Mittellinie symmetrisch sein.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einem Mehrtrommeldreschwerk,
- Fig. 2: eine perspektivische Ansicht der Fördertrommel des Mehrtrommeldreschwerks,
- Fig. 3: eine perspektivische Ansicht der Fördertrommel in auseinandergezogenem Zustand,
- Fig. 4: eine rückwärtige, auseinandergezogene Ansicht des Abstreifers der Fördertrommel,
- Fig. 5: eine seitliche Ansicht des Mehrtrommeldreschwerks bei minimalem Abscheidespalt und
- Fig. 6: eine seitliche Ansicht des Mehrtrommeldreschwerks bei maximalem Abscheidespalt.

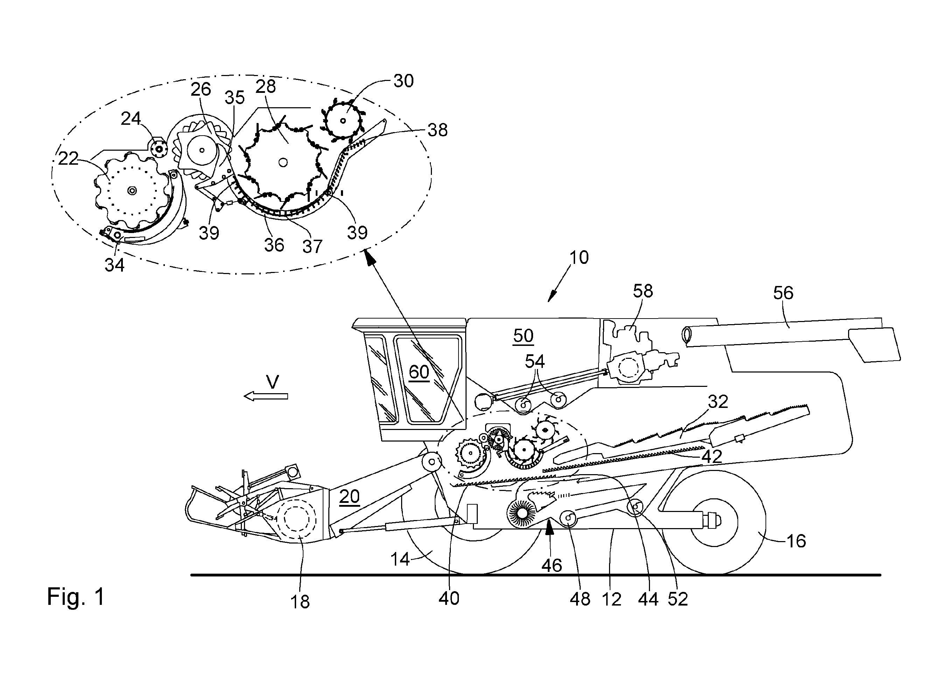

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z.B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, eine Abscheidetrommel 28 sowie einen Abgabeförderer 30 umfasst. Stromab des Abgabeförderers 30 befindet sich ein Strohschüttler 32. Die Dreschtrommel 22 ist in ihrem unteren und rückwärtigen Bereich von einem Dreschkorb 34 umgeben. Oberhalb der Fördertrommel 26 befindet sich eine fest stehende Abdeckung und unterhalb der Abscheidetrommel 28 ein Abscheidekorb 36 mit verstellbaren Fingerelementen. Unterhalb des unterschlächtig fördernden Abgabeförderers 30 ist ein Trennrost 38 angeordnet. Ein Abstreifer 35 ist abgabeseitig unterhalb der Fördertrommel 26 dem Einlaufbereich der Abscheidetrommel 28 vorgelagert. Der Abscheidekorb 36 ist in seinem mittleren Bereich mit konventionellen Abstreifleisten 37 und in seinem Ein- und Auslaufbereich mit Fingerrechen 39 ausgestattet, obwohl es auch möglich wäre, ihn nur mit Fingerrechen 39 oder nur mit Abstreifleisten 37 auszustatten. Die Abscheidetrommel 28 ist unmittelbar stromab der Fördertrommel 26 angeordnet, d.h. keine weitere Fördertrommel ist zwischen der Fördertrommel 26 und der Abscheidetrommel 28 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu vom Dreschkorb 34, vom Abscheidekorb 37 und vom Trennrost 38 sowie vom Strohschüttler 32 zu einer Reinigungseinrichtung 46. Durch die Reinigungseinrichtung 46 gereinigtes Getreide wird mittels einer Körnerschnecke 48 einem nicht gezeigten Elevator zugeführt, der es in den Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

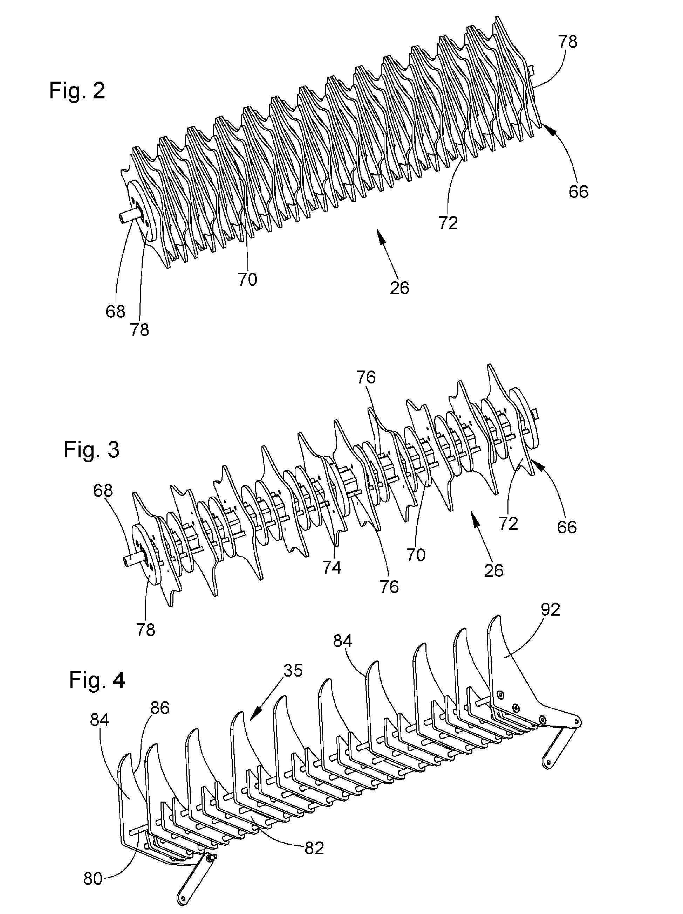

Die Fördertrommel 30 ist in der Figur 2 in einer perspektivischen Ansicht gezeigt. Sie umfasst eine Anzahl (in der dargestellten Ausführungsform 27) Förderscheiben 66, die auf einer mittigen, rotativ antreibbaren Welle 68 angeordnet und durch kreiszylindrische Distanzringe 70 voneinander beabstandet gehalten werden. Die Förderscheiben 66 umfassen jeweils fünf um ihren Umfang verteilte Zinken 72, obwohl auch mehr oder weniger Zinken 72 verwendet werden könnten. Die Zinken 72 sind dreieckig mit nach radial äußeren Spitzen und in Umfangsrichtung zu einer radialen Mittellinie symmetrisch. Die Zinken 72 benachbarter Förderscheiben 66 sind relativ zueinander winkelversetzt angeordnet, sodass die äußeren Spitzen der Zinken 72 der Fördertrommel 26 jeweils auf einer von insgesamt fünf imaginären Wendeln liegen.

Anhand der auseinandergezogenen Darstellung in der Figur 3 ist erkennbar, dass die Welle 68 in ihrem (im montierten Zustand von Förderscheiben 66 und Distanzringen 70 belegten) mittigen Bereich 74 einen nicht-kreisförmigen Querschnitt aufweist, der hier sechseckig ist und auch eine beliebige andere Zahl an Ecken haben könnte. Die Förderscheiben 66 umfassen jeweils eine passende, mittige Öffnung, die formschlüssig mit an dem Bereich 74 anliegt, sodass die Förderscheiben 66 in Umfangsrichtung drehfest am Bereich 74 der Welle 68 fixiert ist. Die Fixierung in axialer Richtung der Welle 68 erfolgt durch Spannstangen 76, die sich axial durch Öffnungen in den Förderscheiben 66 und den Distanzringen 70 erstrecken und an Endscheiben 78 auf beiden Enden der Welle 68 fixiert sind. Die Spannstangen 76 liegen jeweils von außen an einer Endscheibe 78 an und sind an der anderen Endscheibe 78 durch Gewindeschrauben oder -muttern fixiert, sodass sie und die Förderscheiben 66 und Distanzringe 70 in axialer Richtung gespannt und fixiert sind. Die Endscheiben 78 sind mittels Spannstangen 76 und Gewindeschrauben oder -muttern mit den Förderscheiben 66 und den Distanzringen 70 in axialer Richtung verspannt. Die axiale Sicherung erfolgt durch wenigstens ein Verbindungselement (Passstift, Hohlspannstift, Schraube, o.ä.), welches sich radial durch wenigstens eine Endscheibe mit er Welle 68 verbunden ist.

Die in der Figur 4 in einer auseinandergezogenen Stellung gezeigten Abstreifer 35 umfassen zungenförmige Abstreiferelemente 84, die ebenfalls an Spannstangen 80 befestigt sind, welche sich durch Öffnungen in den Abstreifern 35 erstrecken. Zwischen benachbarten Abstreiferelementen 84 sind Abstandselemente 82 angeordnet, die ebenfalls mit Öffnungen versehen sind, durch die sich die Spannstangen 80 erstrecken. Auch hier werden die Spannstangen 80 durch Gewindeschrauben oder -muttern fixiert, wodurch die Abstreiferelemente 84 und die Abstandselemente 82 in axialer Richtung verspannt werden.

Die Förderscheiben 66 sind durch die Distanzringe 70 voneinander im Abstand angeordnet. Zwischen den Zinken 72 benachbarter benachbarte Förderscheiben 66 greift jeweils ein Abstreiferelement 84 ein. Am oberen Ende der Abstreiferelemente 84 geformte Vertiefungen 86 entsprechen in ihrem Durchmesser den Distanzringen 70, sodass sie in sehr kleinem Abstand von den Distanzringen 70 angeordnet werden oder sogar daran anliegen können.

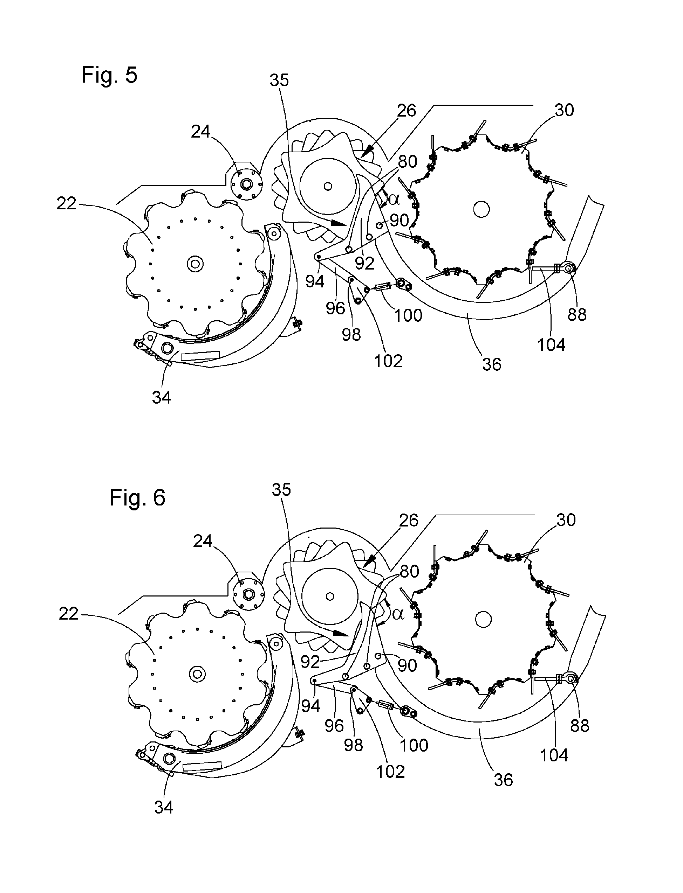

Die Abstreiferelemente 84 heben das Erntegut abgabeseitig aus den Förderscheiben 66 heraus und verhindern ein unerwünschtes Wickeln des Ernteguts um die Fördertrommel 26. Wie anhand der Figuren 5 und 6 dargestellt, ist der Abscheidekorb 36 in der Nähe seines rückwärtigen Endes um eine sich parallel zur Drehachse der Abscheidetrommel 30 erstreckende, erste Drehachse 88 schwenkbar am Rahmen 12 des Mähdreschers 10 gelagert. Die exakte Lage dieser Drehachse 88 kann durch Verstellelemente 104 manuell justiert werden. An seinem einlassseitigen Ende ist der Abscheidekorb 36 um eine zweite Drehachse 90, die sich parallel zur Drehachse 88 erstreckt, mit dem Abstreifer 35 verbunden. Ein äußeres Abstreiferelement 92 ist gegenüber den übrigen Abstreiferelementen 84 nach vorn hin verlängert (vgl. Figur 4) und im Abstand von der zweiten Drehachse 90 um eine dritte Drehachse 94, die sich parallel zur Drehachse 90 erstreckt, mit einem Lenker 96 verbunden, der seinerseits an seinem zweiten Ende um eine vierte Drehachse 98 drehbar am Rahmen 12 gelagert ist. Der Lenker 96 erstreckt sich von der dritten Drehachse schräg nach hinten und unten. Ein Aktor 100, der manuell oder mit Fremdkraft betätigt sein kann, erstreckt sich zwischen einer starr mit dem Rahmen 12 verbundenen Halteplatte 102 und dem vorderen Bereich des Abscheidekorbs 36 und ist mit diesen beiden Befestigungspunkten um sich parallel zu den Drehachsen 88, 92, 94 und 98 erstreckende Drehachsen schwenkbar verbunden. Der Aktor 100 könnte auch zwischen der Halteplatte 102 und dem äußeren Abstreiferelement 92 (oder dem Lenker 96) angelenkt sein. Äußere Abstreiferelemente 92, Lenker 96 und Aktoren 100 können an einer oder beiden Seiten des Mehrtrommeldreschwerks vorgesehen sein.

Durch Verstellen des Aktors 100 von Hand oder bei einem fremdkraftbetätigten Aktor 100 über eine geeignete Bedienereingabeeinrichtung aus der Kabine 60 kann somit der einlassseitige Abscheidespalt zwischen der Abscheidetrommel 30 und dem Abscheidekorb 36 verändert werden, um die Größe des Abscheidespalts manuell oder selbsttätig an die Art des jeweils zu erntenden Ernteguts und andere Bedingungen (Feuchtigkeit, Verlustrate, Kornbeschädigung) anpassen zu können. Durch die Kopplung des einlassseitigen Endes des Abscheidekorbs 36 an den Abstreifer 35 und die Kopplung des Abstreifers 35 mit dem Lenker 96 bewegt sich der Abstreifer 35 nach unten, wenn der Abscheidespalt vergrößert wird. Gleichzeitig wird der Abstreifer 35 geringfügig im Uhrzeigersinn gedreht. Dadurch erreicht man, dass die obere Spitze des Abstreifers 35 stets den Distanzringen 70 nah benachbart bleibt, um das Abstreifen des Ernteguts aus der Fördertrommel 26 zu gewährleisten. Auch ist der Winkel α zwischen der dem Erntegut benachbarten Fläche des Abstreifers 35 und den vorlaufenden Flächen der Zinken 72 der Fördertrommel 26 bei allen vorgesehenen Stellungen des Abscheidekorbs 36 größer als 90°, was Wickelprobleme an der Fördertrommel 26 vermeidet. Schließlich wird durch diese Kinematik gewährleistet, dass das Erntegut bei vergrößertem Abscheidespalt (Figur 6) weiter nach außen abgegeben wird als bei einem kleineren Abscheidespalt (Figur 6), was den Erntegutfluss und die Abscheidewirkung der Abscheidetrommel 36 verbessert.

## Patentansprüche

1. Tangentialdreschwerk mit einer Fördertrommel (26) und einer stromab der Fördertrommel (26) angeordneten Dresch- oder Abscheidetrommel (30), der ein einlassseitig positionsveränderbarer Dresch- oder Abscheidekorb (36) zugeordnet ist, **dadurch gekennzeichnet, dass** ein gemeinsam mit dem Dresch- oder Abscheidekorb (36) verstellbarer Abstreifer (35) mit der Fördertrommel (26) zusammenwirkt.

2. Tangentialdreschwerk nach Anspruch 1, wobei der Dresch- oder Abscheidekorb (36) um eine seinem Auslass benachbarte Drehachse (88), die sich parallel zur Drehachse der Dresch- oder Abscheidetrommel (30) erstreckt, drehbar ist.

3. Tangentialdreschwerk nach Anspruch 2, wobei der Abstreifer (35) um eine sich parallel zur Drehachse der Dresch- oder Abscheidetrommel (30) erstreckende Achse (90) drehbar am Dresch- oder Abscheidekorb (36) angelenkt sind.

4. Tangentialdreschwerk nach Anspruch 3, wobei der Abstreifer (35) im Abstand von der Achse (90), an der er drehbar mit dem Dresch- oder Abscheidekorb (36) verbunden sind, um eine Achse (94) drehbar mit einem Lenker (96) verbunden sind, der weiterhin um eine sich parallel zur Drehachse der Dresch- oder Abscheidetrommel (30) erstreckende Achse (98) drehbar gelagert ist.

5. Tangentialdreschwerk nach einem der Ansprüche 1 bis 4, wobei der Winkel (α) zwischen der dem Erntegut benachbarten Fläche des Abstreifers (35) und der vorlaufenden Fläche eines Zinkens (72) der Fördertrommel (26) bei allen vorgesehenen Stellungen des Dresch- oder Abscheidekorbs (36) größer als 90° ist.

6. Tangentialdreschwerk nach einem der Ansprüche 1 bis 5, wobei die Fördertrommel (26) unter- oder oberschlächtig arbeitet.

7. Tangentialdreschwerk nach einem der Ansprüche 1 bis 6, wobei die Fördertrommel (26) eine Vielzahl von voneinander in axialer Richtung beabstandeten Förderscheiben (66) umfasst, um deren Umfang Zinken (72) verteilt sind und Abstreiferelemente (84) des Abstreifers (35) jeweils in den Zwischenraum zwischen in axialer Richtung benachbarten Zinken (72) der Fördertrommel (26) eingreifen.

8. Tangentialdreschwerk nach Anspruch 7, wobei die Zinken (72) benachbarter Förderscheiben (66) relativ zueinander winkelversetzt angeordnet sind, sodass die Spitzen der Zinken (72) der Fördertrommel (26) auf einer gedachten Wendel liegen.

9. Tangentialdreschwerk nach Anspruch 7 oder 8, wobei die Zinken (72) dreieckförmig und in Umfangsrichtung zu einer radialen Mittellinie symmetrisch sind.

10. Mähdrescher (10) mit einem Tangentialdreschwerk nach einem der vorhergehenden Ansprüche.
